# EUROPÄISCHE PATENTSCHRIFT

(11) **EP 1 364 158 B1**
(45) Veröffentlichungstag und Bekanntmachung des Hinweises auf die Patenterteilung: **09.11.2005**
(21) Anmeldenummer: 02716807.9
(22) Anmeldetag: 22.02.2002
(51) Int. Cl.: F21V 8/00, G02B 6/00

(54) **VORRICHTUNG ZUM ERZEUGEN VON WEISSLICHT**
DEVICE FOR PRODUCING A WHITE LIGHT
DISPOSITIF POUR PRODUIRE DE LA LUMIERE BLANCHE

(30) Priorität: 01.03.2001 DE 10109850
(43) Veröffentlichungstag der Anmeldung: 26.11.2003
(73) Patentinhaber: WaveLight Laser Technologie AG, 91058 Erlangen (DE)
(72) Erfinder: POISEL, Hans, 91227 Leinburg (DE); HERBERGER, Thomas, 91301 Forchheim (DE)
(74) Vertreter: von Hellfeld, Axel
(86) Internationale Anmeldenummer: PCT/EP2002/001905
(87) Internationale Veröffentlichungsnummer: WO 2002/070948

(56) Entgegenhaltungen:
- EP-A- 0 280 584
- EP-A- 0 982 924
- DE-A- 19 531 455
- DE-A- 19 853 106
- US-A- 5 579 429

## Beschreibung

Die Erfindung betrifft eine Vorrichtung zum Erzeugen von Weißlicht. Unter Weißlicht wird hier insbesondere elektromagnetische Strahlung im sichtbaren Bereich des Spektrums verstanden, die spektral so zusammengesetzt ist, dass zumindest annähernd der visuelle Eindruck von Weißlicht erreicht wird.

Insbesondere zur Beleuchtung des Augeninnenraumes wird häufig Weißlicht verwendet. Hierfür wird ein feiner Lichtwellenleiter mit z.B. einem Durchmesser von weniger als einem Millimeter (bevorzugt weniger als 0,7 mm) in den Augeninnenraum eingeführt. Ein derartiger Lichtwellenleiter hat eine numerische Apertur von z.B. 0,37. Für Diagnosezwecke ist im Inneren des menschlichen Auges in der Regel eine Beleuchtungsstärke von bis zu 100.000 lux erforderlich.

Der Stand der Technik zur Erzeugung von weißem Licht kennt Glüh- oder Entladungslampen. Derartige Lampen sind zwar hinreichend leistungsstark, weisen jedoch einige technische Probleme auf, nämlich insbesondere eine große Wärmeentwicklung, eine große Baugröße, eine Änderung des Weißtons bei einer Leistungsänderung, eine geringe Einkoppeleffizienz in einen Lichtwellenleiter, bei Entladungslampen eine aufwendige Leistungselektronik, und in aller Regel eine geringe Lebensdauer.

Es ist im Stand der Technik auch bekannt, weißes Licht durch aditive Mischung (Überlagerung) aus zwei oder drei Grundfarben zu erzeugen und hierfür lichtemittierende Dioden (LED) oder Laser zu verwenden. LEDs sind derzeit noch zu leuchtschwach und auch Laser in Diodenform (Halbleiterlaser) sind noch nicht in allen erforderlichen Farben und Leistungsstärken verfügbar. Andere Lasertypen, wie Festkörperlaser oder Gaslaser, sind sehr aufwendig.

DE 198 53 106 A1 offenbart einen fluoreszierenden Formkörper, der eine oder mehrere fluorszierende Substanzen in Kunststoff enthält. Eine oder mehrere Lichtquellen sind so angeordnet, dass deren Licht in den Formköper eingestrahlt und in diesem weitergeleitet wird. Licht der Lichtquelle(n) regt die fluoreszierenden Substanzen an, die daraufhin sichtbares Licht erzeugen. Das sichtbare Licht wird aus dem Formkörper ausgekoppelt und beispielsweise für optische Anzeigeelemente oder Anzeigeeinheiten oder zur Beleuchtung verwendet.

DE 195 31 455 offenbart einen strahlungsgepumpten Festkörper-Farbstofflaser, der in Kunststoffen eingebracht Farbstoffe umfasst, die durch Strahlung zur Abgabe kurzwelliger Laserstrahlung angeregt werden. Dabei kann das aktive Volumen des Lasers als Faser ausgebildet sein. Der Laser kann unterschiedlich dotierte Fasern aufweisen, die bei drei dominanten Wellenlängen Strahlung abgeben, so dass eine Farbmischung bis hin zu weißem Licht erreicht werden kann.

EP 0 982 914 A2 offenbart eine Vorrichtung zur Erzeugung weißen Lichts für einen Scanner. Die Vorrichtung umfasst als Lichtquelle eine LED, deren Licht in einen lichtführenden Stab eingekoppelt wird. In dem lichtführenden Stab sind ein nicht fluoreszierender Streifen und wenigstens ein fluoreszierender Streifen eingebettet. Die LED gibt blaues, violettes oder ultraviolettes Licht ab. Dieses Licht wird von dem nicht fluoreszierenden Streifen im Wesentlichen unverändert wieder abgegeben. Der wenigstens eine fluoreszierende Streifen wird im Gegensatz dazu von dem Licht der LED zur Abgabe von Licht anderer Wellenlänge(n) angeregt. Das von dem nicht fluoreszierenden Streifen abgegebene Licht und von dem wenigstens Einem fluoreszierenden Streifen abgegebenes Licht überlagern sich, wobei insgesamt weißes Licht abgegeben wird.

US 5,579,429 offenbart eine fluoreszierende optische Faser, in die Licht eines Lasers eingekoppelt wird. Die Faser umfasst einen Laserstrahlung führenden Kern, der von einer Schicht ummantelt ist, in die fluoreszierende Stoffe eingebettet sind. Aus dem Kem durch die fluoreszierende Schicht hindurch tretende Strahlung regt die Schicht zur Abgabe von Strahlung anderer Wellenlänge an, wobei weißes Licht abgegeben werden kann.

EP 0 280 584 A1 offenbart mehrere parallel liegende Lichtleitfasern, die mit unterschiedlichen fluoreszierenden Substanzen dotiert sind. Die fluoreszierenden Substanzen geben nach Anregung durch Laserstrahlung rotes, blaues und grünes Licht ab, das durch Überlagerung weißes Licht erzeugt.

Der Erfindung liegt die Aufgabe zugrunde, eine Weißlichtquelle bereitzustellen, die den obengenannten Problemen des Standes der Technik zumindest teilweise abhilft.

Die erfindungsgemäße Weißlichtquelle weist zumindest einen Halbleiterlaser auf, der Strahlung im blauen und/oder violetten und/oder ultravioletten Spektralbereich abgibt, und zumindest einen Lichtwellenleiter zur Weißlichterzeugung, in den die Strahlung des Halbleiterlasers zumindest teilweise eingekoppelt wird, wobei der Lichtwellenleiter derart mit durch die Laserstrahlung direkt oder indirekt anregbaren Fluoreszenzfarbstoffen dotiert ist, dass durch Überlagerung (Mischung) von verschiedenen Strahlungsanteilen am Ende des Lichtwellenleiters Weißlicht emittiert wird. Dabei kann die Weißlichterzeugung mit oder ohne Einschluss der Anregungsstrahlung erfolgen.

Erfindungsgemäß sind die Fluoreszenzfarbstoffe und die Laserstrahlung so abgestimmt, dass die Fluoreszenzstrahlung eines Fluoreszenzfarbstoffs als Pumplicht für einen anderen Fluoreszenzfarbstoff dient.

Gemäß einer bevorzugten Ausgestaltung ist vorgesehen, dass dem für die Weißlichterzeugung vorgesehenen Lichtwellenleiter ein weiterer Lichtwellenleiter nachgeschaltet ist, der biegbar ist. Dieser weitere Lichtwellenleiter ist so gewählt, dass er mindestens die Frequenzen (Moden) des vorgeschalteten Lichtwellenleiters führen kann. Er kann auch eine höhere numerische Apertur (NA) haben.

Eine weitere Ausgestaltung der Vorrichtung sieht vor, dass der für die Weißlichterzeugung vorgesehene Lichtwellenleiter einen Durchmesser kleiner als 1000 µm hat.

Bevorzugt ist vorgesehen, einen aktiven Lichtwellenleiter vorzusehen, in dem durch Strahlungsüberlagerung das Weißlicht erzeugt wird, und diesem aktiven Lichtwellenleiter einen passiven Lichtwellenleiter nachzuschalten, der bevorzugt hoch biegsam ist und einen geringen Durchmesser, z. B. weniger als 0,7 mm, hat. Dieser passive Lichtwellenleiter kann gemäß einer bevorzugten Ausgestaltung z. B. in das Augeninnere einführbar sein. Er kann als sog. "Wegwerfteil" ausgestaltet werden.

Gemäß einer Variante der Erfindung ist vorgesehen, dass der Lichtwellenleiter zur Weißlichterzeugung mit einer Mehrzahl von unterschiedlichen Fluoreszenzfarbstoffen dotiert ist, die in verschiedenen Spektralbereichen fluoreszieren.

Es können auch mehrere, sich parallel erstreckende Lichtwellenleiter zur Weißlichterzeugung vorgesehen sein. Dabei können die verschiedenen Lichtwellenleiter mit unterschiedlichen Fluoreszenzfarbstoffen dotiert sein.

Es können auch mehrere Halbleiterlaser vorgesehen sein, deren Strahlungen in eine oder mehrere Fasern eingekoppelt werden, wobei insbesondere vorgesehen sein kann, dass die einzelnen Fasern mit unterschiedlichen Fluoreszenzfarbstoffen dotiert sind.

Die Erfindung beinhaltet auch die Verwendung einer der vorstehend beschriebenen Vorrichtungen als Weißlichtquelle zur Beleuchtung des Augeninnenraums.

Die Vorteile der vorstehend beschriebenen, erfindungsgemäßen Vorrichtungen sind eine kompakte Baugröße, eine starke Robustheit gegenüber Dejustierungen, eine geringe Wärmeentwicklung, eine einfach einstellbare Beleuchtungsstärke, ein einfach einstellbarer Weißton und eine wenig aufwendige Schnittstelle (Einkoppelung) zwischen der Weißlichtquelle und einem gegebenenfalls zusätzlich verwendeten Lichtwellenleiter.

Ausführungsbeispiele der Erfindung werden nachfolgend anhand der Zeichnung näher erläutert. Es zeigt:
- Fig. 1: schematisch ein erstes Ausführungsbeispiel einer Vorrichtung zum Erzeugen von Weißlicht;
- Fig. 2: einen Ausschnitt eines Lichtwellenleiters gemäß der Vorrichtung nach Fig. 1 in vergrößertem Maßstab;
- Fig. 3: ein zweites Ausführungsbeispiel einer Vorrichtung zum Erzeugen von Weißlicht in schematischer Darstellung; und
- Fig. 4: einen Schnitt durch ein weiteres Ausführungsbeispiel einer Vorrichtung zum Erzeugen von Weißlicht mit mehreren Lichtwellenleitern.

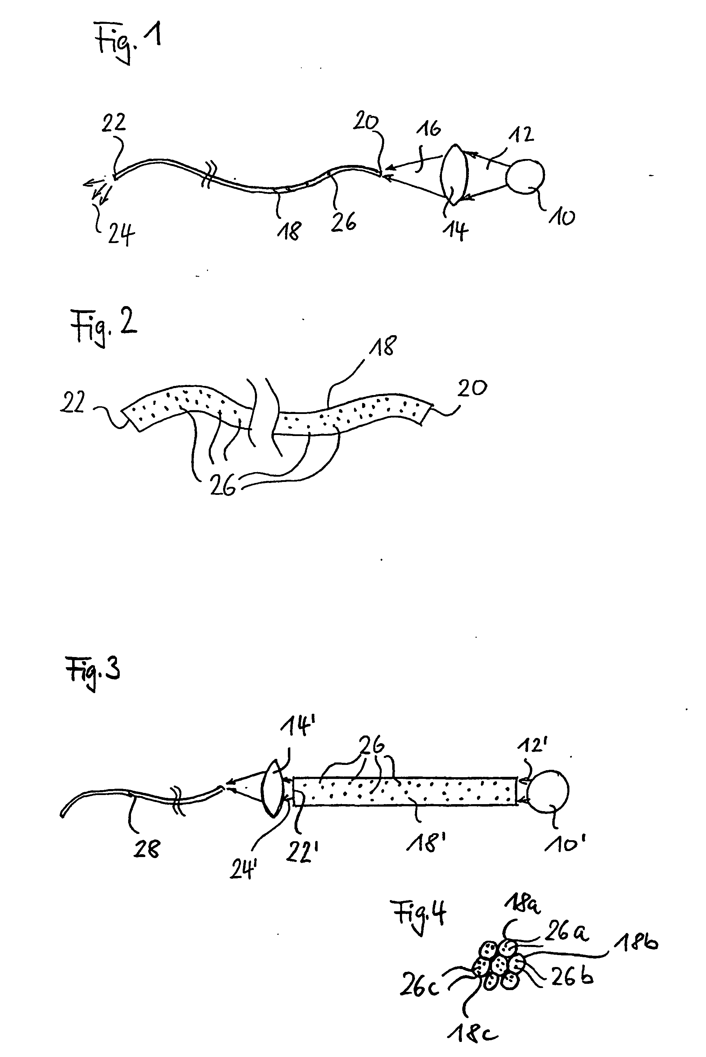

Beim Ausführungsbeispiel gemäß Fig. 1 ist ein Halbleiterlaser 10 (eine Laserdiode LD) vorgesehen, die im blauen/violetten Spektralbereich emittiert. Sie dient als Pumplichtquelle. Die Abstrahlcharakteristik (Richtungscharakteristik der abgestrahlten Strahlung) von Laserdioden ist relativ stark ausgerichtet, so dass ohne größere Verluste ca. 90% oder mehr der abgestrahlten elektromagnetische Strahlung in einen Lichtwellenleiter eingekoppelt werden können. Die vom Halbleiterlaser 10 abgestrahlte blaue und/oder violette und/oder ultraviolette Strahlung wird über eine Einkoppeloptik 14 (in Fig. 1 nur schematisch dargestellt) in einen Lichtwellenleiter 18 eingekoppelt. Die Strahlung tritt durch den Eintritt 20 in den Lichtwellenleiter 18 ein und durch dessen Austritt 22 aus ihm aus. Beim Ausführungsbeispiel gemäß Fig. 1 sind in den Lichtwellenleiter 18 eine Vielzahl von Fluoreszenzfarbstoffmolekülen 26 dotiert, die durch die Laserstrahlung 16 so anregbar sind, daß Sie im sichtbaren Spektralbereich des Spektrums (sichtbar für das menschliche Auge) fluoreszieren. Die Fluoreszenzfarbstoffe 26 im Lichtwellenleiter 18 sind so ausgewählt, dass durch Überlagerung aller spektralen Beiträge am Ende 22 weißes Licht 24 aus dem Lichtwellenleiter 18 emittiert wird.

Dabei können die Fluoreszenzfarbstoffe und die Laserstrahlung 16 des Halbleiterlasers 10 so ausgewählt werden, dass die Laserstrahlung direkt alle Farbstoffe anregt. Es ist auch möglich, die Fluoreszenzfarbstoffmoleküle und die Laserstrahlung so abzustimmen, dass das Fluoreszenzlicht des einen Farbstoffs als Pumplicht für einen anderen Farbstoff dient usw. Die Farbstoffe und das Laserlicht sowie die Parameter des Lichtwellenleiters können auch so aufeinander abgestimmt werden, dass die Laserstrahlung 16 nicht vollständig von den Fluoreszenzfarbstoffen absorbiert wird, sondern am Ende 22 des Lichtwellenleiters auch einen spektralen Beitrag zum Weißlicht leistet.

Fig. 2 zeigt den Lichtwellenleiter 18 der Vorrichtung nach Fig. 1 in vergrößertem Maßstab, wobei die Dotierung mit Fluoreszenzfarbstoff-Molekülen 26 schematisch angedeutet ist.

Fig. 3 zeigt ein weiteres Ausführungsbeispiel einer Vorrichtung zum Erzeugen von Weißlicht, bei der die Funktionen des Lichtwellenleiters einerseits zur Weißlichterzeugung und eines Lichtwellenleiters andererseits zur Einkopplung des Weißlichtes in z.B. den Augeninnenraum voneinander getrennt sind. Damit können die Lichtwellenleiter für den jeweiligen Zweck optimal ausgewählt werden. Beim Ausführungsbeispiel gemäß Fig. 3 wird die von einem Halbleiterlaser 10' emittierte blaue und/oder violette und/oder ultraviolette Strahlung 12' direkt oder indirekt über eine Einkoppeloptik in einen Lichtwellenleiter 18' eingekoppelt, der mit Fluoreszenzfarbstoffen 26 dotiert ist. Die am Ende 22' des Lichtwellenleiters 18' emittierte Weißlichtstrahlung 24' wird über eine Einkoppeloptik 14' in ein Ende eines Lichtwellenleiters 28 eingekoppelt. Der Lichtwellenleiter 28 hat einen so kleinen Durchmesser, dass er in den Augeninnenraum einführbar ist. Bei diesem Ausführungsbeispiel braucht der Lichtwellenleiter 28 nicht mit Fluoreszenzfarbstoffen dotiert zu sein.

Beim Ausführungsbeispiel gemäß Fig. 3 können, ebenso wie beim Ausführungsbeispiel nach den Figuren 1 und 2, unterschiedliche Fluoreszenzfarbstoffe im Lichtwellenleiter 18' bzw. 18 vorgesehen sein, so dass insgesamt durch Abstimmung der Konzentration der Fluoreszenzfarbstoffmoleküle im Lichtwellenleiter, der Länge des Lichtwellenleiters und der emittierten Laserstrahlung am Ende des Lichtwellenleiters das gewünschte Weißlicht entsteht.

Der Vorteil der in den Figuren 1 und 3 dargestellten Anordnungen liegt unter anderem darin, dass nur eine Laserdiode 10 erforderlich ist, deren mit hohem Wirkungsgrad erzielte Strahlung ohne weiteres mit wiederum sehr hohem Wirkungsgrad in den Lichtwellenleiter angekoppelt werden kann. Dabei ist eine Änderung des Weißlichttones und damit eine Änderung des Farbeindruckes des emittierten Lichtes 24 in einfacher Weise durch z.B. Änderung der Pumpleistung des Halbleiterlasers oder auch durch Änderung der Faserlänge möglich.

Um eine gute räumliche Mischung der spektralen Anteile zu erreichen, können die Lichtwellenleiter mit geeigneten Querschnitten versehen werden, z.B. mit einem hexagonalem Querschnitt.

Eine Erhöhung des Wirkungsgerades der Gesamtvorrichtung gemäß den Figuren 1 und 3 ist dadurch möglich, dass die Eintrittsfläche des Lichtwellenleiters 18 bzw. 18' so farbselektiv verspiegelt wird, daß im wesentlichen nur das vom Laser kommende Pumplicht durchgelassen wird, während das Fluoreszenzlicht reflektiert wird. Sowohl das Pumplicht des Lasers als auch das Fluoreszenzlicht wird innenseitig an den Mantelflächen des Lichtwellenleiters reflektiert. Zur Erhöhung des Wirkungsgerades können die Reflexionsflächen verspiegelt werden.

Fig. 4 zeigt schematisch eine Variante der Vorrichtung zum Erzeugen von Weißlicht. Bei dieser Variante sind mehrere Lichtwellenleiter 18a, 18b, 18c (und weitere) parallel angeordnet, d.h. Fig. 4 zeigt einen Schnitt senkrecht zu den Längsachsen der Lichtwellenleiter. Ansonsten entspricht die Anordnung grundsätzlich den Vorrichtungen gemäß den Figuren 1 und 3. Die Lichtwellenleiter 18a, 18b, 18c gemäß Fig. 4 treten -also anstelle des Lichtwellenleiters 18 von Fig. 1 bzw. anstelle des Lichtwellenleiters 18' von Fig. 3.

Beim Ausführungsbeispiel gemäß Fig. 4 können die einzelnen Lichtwellenleiter 18a, 18b, 18c jeweils mit unterschiedlichen Fluoreszenzfarbstoffen 26a, 26b, 26c versehen sein, so dass am emittierenden Ende der Lichtwellenleiter sämtliche Fluoreszenzstrahlungen überlagert (gemischt) werden, um das Weißlicht zu erzeugen.

Es können beim Ausführungsbeispiel gemäß Fig. 4, so wie bei den Ausführungsbeispielen nach den Figuren 1 und 3, in jedem Lichtwellenleiter auch unterschiedliche Fluoreszenzfarbstoffe dotiert sein, so dass insgesamt durch die Überlagerung aller spektralen Beiträge der Fluoreszenzstrahlungen und gegebenenfalls auch des Laserlichtes, das gewünschte Weißlicht erhalten wird.

Das Weißlicht im Sinne der vorstehenden Beschreibung kann auch eine gewünschte farbliche Tönung aufweisen.

Die vorstehend beschriebenen Ausführungsbeispiele von Vorrichtungen zum Erzeugen von Weißlicht können auch wie folgt bevorzugt weiter ausgestaltet werden: Durch eine entsprechende Dotierung, eine ausreichende Pumpleistung und durch wellenlängenselektive Spiegel (bzw. Verspiegelungen) an beiden Enden des Lichtwellenleiters kann ein sog. Faserlaser gebildet werden, derart, dass durch Überlagerung der Strahlungsanteile des Pumplasers mit dem Fluoreszenzlicht (z. B. der Lichtwellenleiter 18 oder 18') am Ausgang weißes Licht emittiert wird. Eine solche Anordnung hat den Vorteil, dass das erzeugte Fluoreszenzlicht zu nahezu 100 % im Lichtwellenleiter 18/18' umgesetzt wird.

## Patentansprüche

1. Vorrichtung zum Erzeugen von Weißlicht, mit:
- einem Halbleiterlaser (10) zur Abgabe von Laserstrahlung (12, 16) im blauen und/oder violetten und/oder ultravioletten Spektralbereich, und
- einem Lichtwellenleiter (18, 18') zur Weißlichterzeugung, in den die Laserstrahlung zumindest teilweise eingekoppelt wird, wobei der Lichtwellenleiter (18, 18') derart mit durch die Laserstrahlung direkt oder indirekt anregbaren Fluoreszenzfarbstoffen (26) dotiert ist, dass durch Überlagerung von Fluoreszenzstrahlungen am Ende (22; 22') des Lichtwellenleiters Weißlicht (24; 24') emittiert wird,
**dadurch gekennzeichnet, dass**
- die Fluoreszenzfarbstoffe (26) und die Laserstrahlung so abgestimmt sind, dass die Fluoreszenzstrahlung eines Fluoreszenzfarbstoffs als Pumplicht für einen anderen Fluoreszenzfarbstoff dient.

2. Vorrichtung nach Anspruch 1,
**dadurch gekennzeichnet, dass** dem für die Weißlichterzeugung vorgesehenen Lichtwellenleiter (18, 18') ein weiterer Lichtwellenleiter (28) nachgeschaltet ist, der biegbar ist.

3. Vorrichtung nach Anspruch 2,
**dadurch gekennzeichnet, dass** der nachgeschaltete Lichtwellenleiter (28'), einen Durchmesser kleiner als 1000 µm hat.

4. Vorrichtung nach Anspruch 2 oder 3,
**dadurch gekennzeichnet, dass** der nachgeschaltete Lichtwellenleiter (28) ein Lichtleiter zu Beleuchtung des Augeninnenraums ist.

5. Vorrichtung nach einem der vorherigen Ansprüche,
**dadurch gekennzeichnet, dass** der für die Weißlichterzeugung vorgesehene Lichtwellenleiter (18, 18'), einen Durchmesser kleiner als 1000 µm hat.

6. Vorrichtung nach einem der vorhergehenden Ansprüche,
**dadurch gekennzeichnet, dass** der für die Weißlichterzeugung vorgesehene Lichtwellenleiter (18, 18') biegbar ist.

7. Vorrichtung nach einem der vorhergehenden Ansprüche,
**dadurch gekennzeichnet, dass** der Lichtwellenleiter (18, 18') zur Weißlichterzeugung mit einer Mehrzahl von unterschiedlichen Fluoreszenzfarbstoffen (26) dotiert ist, die in verschiedenen Spektralbereichen fluoreszieren.

8. Vorrichtung nach einem der vorhergehenden Ansprüche,
**dadurch gekennzeichnet, dass** mehrere, sich parallel erstreckende Lichtwellenleiter (18a, 18b, 18c) zur Weißlichterzeugung vorgesehen sind.

9. Vorrichtung nach Anspruch 8,
**dadurch gekennzeichnet, dass** verschiedene Lichtwellenleiter (18a, 18b, 18c) mit unterschiedlichen Fluoreszenzfarbstoffen (16a, 26b, 26c) dotiert sind.

10. Vorrichtung nach einem der vorhergehenden Ansprüche,
**dadurch gekennzeichnet, dass** mehrere Halbleiterlaser vorgesehen sind.

11. Vorrichtung nach einem der vorhergehenden Ansprüche, **dadurch gekennzeichnet, dass** zumindest einer der Lichtwellenleiter mit einer Vorrichtung versehen ist oder so geformt ist, dass eine Mischung der Wellenleitermoden zur Erzeugung von räumlich homogenem Weißlicht erfolgt.

12. Vorrichtung nach Anspruch 11,
**dadurch gekennzeichnet, dass** die Modenmischung durch eine polygonale Formung, z. B. einen hexagonalen Querschnitt, des Lichtwellenleiters erreicht ist.

13. Verwendung der Vorrichtung nach einem der vorhergenden Ansprüche als Weißlichtquelle zur Beleuchtung des Augeninnenraums.

## Claims

1. A device for the generation of white light, comprising:
- a semiconductor laser (10) for emitting laser radiation (12, 16) in the blue and/or violet and/or ultraviolet region of the spectrum, and
- an optical waveguide (18, 18) for the generation of white light into which the laser radiation is at least partially coupled, with the optical waveguide (18, 18') being doped with fluorescent dyes (26), which may be excited directly or indirectly by the laser radiation in such a manner that by superposition of fluorescent radiations white light (24; 24') is emitted at the end (22; 22') of the optical waveguide, **characterized in that**
- the fluorescent dyes (26) and the laser radiation are matched such that the fluorescent radiation of a fluorescent dye serves as pump light for another fluorescent dye.

2. The device according to claim 1,
**characterized in that** a further optical waveguide (28) is provided downstream of the optical waveguide (18, 18') provided for the generation of white light, which is flexible.

3. The device according to claim 2,
**characterized in that** the downstream optical waveguide (28') has a diameter of less than 1000 µm.

4. The device according to claim 2 or 3,
**characterized in that** the downstream optical waveguide (28) is an optical guide to illuminate the interior of an eye.

5. The device according to one of the preceding claims,
**characterized in that** the optical waveguide (18, 18') provided for the generation of white light has a diameter of less than 1000 µm.

6. The device according to one of the preceding claims,
**characterized in that** the optical waveguide (18, 18') provided for the generation of white light is flexible.

7. The device according to one of the preceding claims,
**characterized in that** the optical waveguide (18, 18') for the generation of white light is doped with a plurality of different fluorescent dyes (26) which fluoresce in different regions of the spectrum.

8. The device according to one of the preceding claims,
**characterized in that** several optical waveguides (18a, 18b, 18c) extending in parallel are provided for the generation of white light.

9. The device according to claim 8,
**characterized in that** different optical waveguides (18a, 18b, 18c) are doped with different fluorescent dyes (16a, 26b, 26c).

10. The device according to one of the preceding claims
**characterized in that** several semiconductor lasers are provided.

11. The device according to one of the preceding claims,
**characterized in that** at least one of the optical waveguides is provided with a means or is shaped in such a manner that a mixture of the wave guide modes for the generation of spatially homogeneous white light is effected.

12. The device according to claim 11,
**characterized in that** the mode mixture is achieved by a polygonal shaping, e.g. by a hexagonal cross section, of the optical waveguide.

13. Use of the device according to one of the preceding claims as white light source for illuminating the interior of an eye.

## Revendications

1. Dispositif pour produire de la lumière blanche, avec :
- un laser à semi-conducteur (10) pour l'émission de rayonnement laser (12, 16) dans la plage bleue eu/ou violette et/ou ultraviolette du spectre et
- un conducteur optique (18, 18') pour la production de la lumière blanche, dans lequel le rayonnement laser est injecté au moins en partie, sachant que le conducteur optique (18, 18') est doté de colorants fluorescents (26) excitables directement ou indirectement par le rayonnement laser, de telle sorte que de la lumière blanche (24 ; 24') est émise à l'extrémité (22 ; 22') du conducteur optique par la superposition des rayonnements par fluorescence,
**caractérisé en ce que**
- les colorants fluorescents (26) et le rayonnement laser sont harmonisés de telle sorte que le rayonnement par fluorescence d'un colorant fluorescent sert de lumière de pompage à un autre colorant fluorescent.

2. Dispositif selon la revendication 1,
**caractérisé en ce qu'**un autre conducteur optique (28), qui est flexible, est monté en aval du conducteur optique (18, 18') prévu pour la production de lumière blanche.

3. Dispositif selon la revendication 2,
**caractérisé en ce que** le conducteur optique (28') monté en aval a un diamètre plus petit que 1000 µm.

4. Dispositif selon la revendication 2 ou 3,
**caractérisé en ce que** le conducteur optique (28) monté en aval est un conducteur optique pour l'éclairage de l'intérieur du globe oculaire.

5. Dispositif selon l'une des revendications précédentes,
**caractérisé en ce que** le conducteur optique (18, 18') prévu pour la production de la lumière blanche a un diamètre plus petit que 1000 µm.

6. Dispositif selon l'une des revendications précédentes,
**caractérisé en ce que** le conducteur optique (18, 18') prévu pour la production de la lumière blanche est flexible.

7. Dispositif selon l'une des revendications précédentes,
**caractérisé en ce que** le conducteur optique (18, 18') prévu pour la production de la lumière blanche est doté d'une pluralité de colorants fluorescents (26) différents qui sont fluorescents dans différentes plages spectrales.

8. Dispositif selon l'une des revendications précédentes,
**caractérisé en ce que** plusieurs conducteurs optiques (18a, 18b, 18c) s'étendant parallèlement sont prévus pour la production de la lumière blanche.

9. Dispositif selon la revendication 8,
**caractérisé en ce que** les différents conducteurs optiques (18a, 18b, 18c) sont dotés de colorants fluorescents (16a, 26b, 26c) différents.

10. Dispositif selon l'une des revendications précédentes,
**caractérisé en ce que** plusieurs lasers à semi-conducteurs sont prévus.

11. Dispositif selon l'une des revendications précédentes,
**caractérisé en ce qu'**au moins un des conducteurs optiques est doté d'un dispositif tel ou est configuré de telle sorte qu'il s'effectue un mélange des modes des conducteurs optiques pour la production d'une lumière blanche spatialement homogène.

12. Dispositif selon la revendication 11,
**caractérisé en ce que** le mélange des modes est atteint par une configuration polygonale du conducteur optique, par exemple par une section hexagonale.

13. Utilisation d'un dispositif selon l'une des revendications précédentes, comme source de lumière blanche pour l'éclairage de l'intérieur du globe oculaire.
